# EUROPEAN PATENT APPLICATION

(11) **EP 4 609 723 A1**
(43) Date of publication of application: **03.09.2025**
(21) Application number: 24386020.2
(22) Date of filing: 27.02.2024
(51) Int. Cl.: A23K 50/48, A23K 10/20, A23K 20/163, A23K 40/00, A23L 29/256

(54) **PETFOOD**

(71) Applicant: MARS INCORPORATED, McLean, VA 22101 (US)
(72) Inventor: The designation of the inventor has not yet been filed
(74) Representative: Haseltine Lake Kempner LLP

(57) **Abstract**

Disclosed herein is a method of forming a petfood, the method comprising:
providing an aqueous first liquid, in which is dispersed an animal-derived product or a meat analogue and in which is dissolved a hydrocolloid, wherein the hydrocolloid is an ionotropic gelling agent;
contacting droplets of the aqueous first liquid with a second liquid, the second liquid having cations dissolved or dispersed therein, to form gelled droplets comprising the animal-derived product or the meat analogue, and a metal ionhydrocolloid;
separating the gelled droplets from the second liquid containing the cations;
combining the gelled droplets with a third liquid comprising water and a thickener, optionally sterilizing the gelled droplets before or after combining them with the third liquid comprising a thickener. Also disclosed herein is a petfood made according to the method. Other methods and petfoods are also described.

## Description

### Field

The present disclosure relates to petfood compositions in the form of gelled droplets.

### Background

Petfood comes in various forms and is sometimes categorized in terms of its moisture content. Dry petfood (like kibble) can have a moisture content of, for example, less than about 15 wt% moisture, wet petfood can have a moisture content of, for example, more than about 50 wt% moisture, and medium moisture content petfood (sometimes known as semi-moist petfood) is somewhere in-between, e.g. from about 15 wt% to 50 wt%.

Petfood treats, e.g. food that may be given to pets occasionally as a reward, are most often in dry form, since they require a long shelf-life and bacteria do not grow so easily in low moisture environments, and pet owners can feed them in a non-messy way to their pets.

Nevertheless, sometimes pets can become too accustomed to their regular treats, i.e. the treats no-longer seem very 'special' to them, and sometimes a change is desired. Most often, a pet owner would try another similar dry treat with a different flavour. Nevertheless, sometimes alternative treats are sought. Some pets, such as cats, are fastidious about their food, and it can be a challenge to find alternative treats that are palatable, particularly where the texture may be different to their regular treats.

In addition to this benefit, pet owner surveys have shown that cats and dogs are either reluctant to drink water or do not drink enough water. This is particularly concerning if the cat or dog is fed a dry diet only, since this can lead to a higher risk of lower urinary tract disease. This invention may thus be helpful to the health of cats and dogs in providing a very palatable high moisture treat, which could benefit cats and dogs which consume such products by effectively helping to enhance their consumption of water.

The present inventors sought to devise an alternative to the available dry treats that would be desirable to pets, particularly cats and dogs, yet still have a reasonable shelf-life.

### Summary of the Invention

in a first aspect, there is provided a method of forming a petfood, the method comprising:
providing an aqueous first liquid, in which is dispersed an animal-derived product or a meat analogue and in which is dissolved a hydrocolloid, wherein the hydrocolloid is an ionotropic gelling agent;
contacting droplets of the aqueous first liquid with a second liquid, the second liquid having cations dissolved or dispersed therein, to form gelled droplets comprising the animal-derived product or the meat analogue, and a metal ion-hydrocolloid;
separating the gelled droplets from the second liquid containing the containing the cations;
optionally combining the gelled droplets with a third liquid.

The third liquid may be an aqueous or non-aqueous liquid (e.g. an oil). In an embodiment, the third liquid comprises water and a thickener. The gelled droplets may be sterilized. If combined with a third liquid, the method may involve optionally sterilizing the gelled droplets before or after combining them with the third liquid comprising a thickener.

In an embodiment of the first aspect, there is provided a method of forming a petfood, the method comprising:
providing an aqueous first liquid, in which is dispersed an animal-derived product or a meat analogue and in which is dissolved a hydrocolloid, wherein the hydrocolloid is an ionotropic gelling agent;;
contacting droplets of the aqueous first liquid with a second liquid, the second liquid having cations dissolved or dispersed therein, to form gelled droplets comprising the animal-derived product or the meat analogue, and a metal ion-hydrocolloid;
separating the gelled droplets from the second liquid containing the cations;
combining the gelled droplets with a third liquid comprising water and a thickener,
optionally sterilizing the gelled droplets before or after combining them with the third liquid comprising a thickener.

In a second aspect, there is provided a petfood comprising gelled droplets, wherein the gelled droplets comprise an animal-derived product or a meat analogue and a metal ion-hydrocolloid, wherein the gelled droplets are dispersed in a liquid, wherein the liquid comprises a thickener, the petfood optionally producible by a method according to the first aspect.

In a second aspect, there is provided a petfood producible by a method according to the first aspect.

The present inventors have devised a petfood that can act as a treat to pets, including cats and dogs, and presents an alternative, yet desirable texture and flavour to pets and can have a reasonable shelf life. The gelled droplets in the thickened aqueous liquid can be considered a luxury treat for pet owners to give to their pets, yet be very cost-effective to produce.

It was found that animal-derived products or meat analogues can be incorporated into gelled hydrocolloid droplets and, when in a thickened aqueous liquid, or gravy, was desirable to pets, and could still be fed to them by consumers in a non-messy way. The thickened aqueous liquid aided pets licking the hydrocolloid droplets into their mouths - without this thickened aqueous liquid, it was found that pets would lick the gelled droplets from a container, but many would be dispersed around the container and not reach their mouths. This is undesirable for both the pets and pet owners.

The hydrocolloid droplets are made using spherification of a hydrocolloid. Spherification is used to make some human foods, but typically reverse spherification is more commonly used. Reverse spherification is a method in which a food additive is added to a metal-ion (often calcium) containing liquid, and then droplets of this liquid are contacted with a liquid containing a dissolved hydrocolloid - the hydrocolloid forms a gel on contact with the calcium in the droplets. While this method is effective to produce human foods, and, in some cases, synthetic caviar, it was not found to be very effective to make petfood for a few reasons. First, the gelled hydrocolloid droplets produced by reverse spherification were not found to be very palatable to pets, particularly to cats. This may be due to the texture of the droplets produced by reverse spherification - they typically have a relatively hard exterior (formed by the gelled hydrocolloid) and a much softer (and wetter) interior. However, the droplets in accordance with the present disclosure are preferably produced by 'basic' spherification, i.e. where animal-derived product/meat analogue is added to an aqueous liquid containing dissolved hydrocolloid, and this mixture is added to a liquid containing cations to gel the hydrocolloid. The resultant droplets produced have a more consistent texture throughout, which has been found to be more palatable for pets, particularly cats. Additionally, the animal-derived product or meat analogue containing droplets produced by 'basic' spherification were found to survive high temperature heat treatment, whereas those produced by reverse spherification were found to deteriorate during the heat treatment. Accordingly, the petfood described herein is both palatable and can be heat sterilized and have a reasonable shelf-life.

As described herein, the inventors also devised other features that increase palatability of the petfood described herein and make them desirable for pets.

### Detailed Description

The present disclosure relates to petfood compositions in the form of gelled droplets, which may be in in an aqueous thickened sauce. Optional features of the petfood and the method of making it are described below. Any optional feature can be combined with any aspect described herein and any other optional feature.

### Definitions

The terms used in this specification generally have their ordinary meanings in the art, within the context of this disclosure and in the specific context where each term is used. Certain terms are discussed below, or elsewhere in the specification, to provide additional guidance in describing the compositions and methods of the disclosure and how to make and use them.

As used herein, the terms "about" or "approximately" means within an acceptable error range for the particular value as determined by one of ordinary skill in the art, which will depend in part on how the value is measured or determined, i.e., the limitations of the measurement system. For example, "about" can mean within three or more than three standard deviations, per the practice in the art. Alternatively, "about" can mean a range of up to 20%, preferably up to 10%, more preferably up to 5%, and more preferably still up to 1% of a given value. Also, particularly with respect to systems or processes, the term can mean within an order of magnitude, preferably within five-fold, and more preferably within two-fold, of a value.

The term "alginate" as used herein refers to a salt of alginic acid or free alginic acid.

The term "alginic acid" as used herein refers to its usual meaning in the art. Alginic acid is a linear copolymer with homopolymeric blocks of (I-4)-linked beta-D mannuronate (M) and its C-5 epimer alpha-L guluronate (G) residues, respectively, that are covalently linked together in different sequences or blocks.

"Animal-derived product" refers to an edible portion of an animal material that includes animal protein. The animal-derived product may comprise meat. Meat may be defined as the flesh of an animal, typically muscle or protein derived from muscle. The animal material may be cooked or uncooked before incorporation into the gelled droplets. The animal material may be cooked as part of a heat sterilization process that may form part of the method of the present disclosure. An animal-derived product may be, for example, chicken-derived product powder (i.e. powdered chicken parts) or fish-derived product frozen (i.e. frozen parts from fish).

The animal-derived product (animal material) that is used in the present method may comprise animal-derived products (e.g. meat) fit for human consumption and/or animal by-products. The animal material may suitably contain at least 50 wt.%, more preferably at least 70 wt.% and most preferably at least 85 wt.% of animal by-products and/or meat. Animal by-products are the entire bodies or parts of animals or products of animal origin not intended for human consumption, including ova, embryos and sperm. Examples of animal by-products include, but are not limited to:
- parts of slaughtered animals which are rejected as unfit for human consumption but not affected by any sign of a communicable disease;
- hides and skins, hooves and horns, pig bristles and feathers, e.g. originating from animals that are slaughtered in a slaughterhouse and may have been declared fit for human consumption;
- blood obtained from animals, which may have been declared fit for human consumption;
- animal by-products derived from the production of products, which may have been intended for human consumption, including degreased bones and greaves;
- former foodstuffs of animal origin which are no longer intended for human consumption but not meeting a producer's specification or due to problems of manufacturing or packaging defects;
- raw milk originating from animals that do not show any signs of a communicable disease;
- fish or other sea animals, except sea mammals, caught in the open sea for the purpose of fishmeal production, and fresh by-products from fish from plants manufacturing fish products for human consumption;
- shells of eggs originating from animals that do not show any signs of a communicable disease;
- blood, hides and skins, hooves, feathers, wool, horns, hair and fur originating from healthy animals;
- Animal digests derived from animal tissues, including cold-blooded marine animals, excluding hair, horns, teeth, hooves, and feathers.

"Meat analogue" refers to non-animal proteins that resemble meat protein (animal-derived product protein) in one or more of taste, texture and aroma. Examples of non-animal protein that can produce a meat analogue, include vegetable proteins, algal proteins, microbial proteins.

The term "pet food" as used herein refers to a food composition designed for ingestion by non-human mammal. Non-human mammals encompass feline animals and canine animals, including pets such as feline pets and canine pets like cats and dogs.

The term "microbiologically stable" as used herein refers to the status of a substance or product wherein outgrowth of bacterial cells, including of cells from pathogenic bacteria, is prevented.

The term "microbiological stability" as used herein refers to the property of a substance or product to prevent the outgrowth of bacterial cells, including preventing the outgrowth of cells from pathogenic bacteria such as of the genus Salmonella, Listeria, and Clostridium. For example, the petfood is sterilized to kill bacteria and achieve microbiological stability.

The term "non-human mammal" as used according to its conventional meaning herein, encompasses feline animals and canine animals as well as mammal pets, which include cats and dogs.

The term "palatability" means a relative preference of an animal for one food product to another. Palatability refers to the overall willingness of an animal to eat a certain food product. Advantageously but not necessarily, palatability further refers to the capacity of the eaten food product to satisfy the animal. Whenever an animal shows a preference, for example, for one of two or more food products, the preferred food product, is more "palatable", and has "enhanced palatability". The relative palatability of one food product compared to one or more other food products can be determined, for example, in side-by-side, free- choice comparisons, e.g., by relative consumption of the food products, or other appropriate measures of preference indicative of palatability, such as average intake of the product, and the acceptance and refusal rates.

The term "palatability enhancer", as used herein refers to any compound, composition, formulation, or other material useful for enhancing the attractiveness and palatability of a petfood composition. Thus, such palatability enhancers can contribute to initial appeal, continued consumption, or repeated presentation aspects of palatability, or any combination thereof. Such product can consist of liquid and/or powdered palatability enhancers. Non limiting examples of palatability enhancers include fats and oils, nitrogen compounds (e.g., proteins, peptides, and amino acids), carbohydrates (e.g., flours, starches, edible gums), carbonyl compounds, chemical molecules, animal digests, nutrients, natural or artificial flavors and aromas, preservatives including antioxidants, surfactants, texturing or stabilizing agents. The palatability enhancers can be added as such in the pet food, or added to the petfood and react in situ for producing resulting compounds that are also encompassed by the term "palatability enhancer". Examples of compounds that can react together in situ during the heat processing of the petfood and can enhance its palatability are, without limitation, nitrogen compounds and carbonyl compounds, which can be transformed into Maillard reaction products, and the like.

Examples of fats include tallow, oils, from any origin such as animal, plant (including vegetable) or marine oils. Plant oils which are typically use are canola oil, soybean oil, corn oil, olive oil, sunflower oil, linseed oil, safflower oil, palm oil, and the like, as well as by-products thereof.

The term "nitrogen compound" includes the twenty known natural amino acids, as well as amino acid sequences, i.e., peptides, dipeptides, tripeptides, oligopeptides and proteins or polypeptides. In some embodiments, the nitrogen compound can be a free amino acid selected from cysteine, methionine, proline, arginine, valine, leucine, isoleucine, phenylalanine, lysine, glycine, glutamic acid, threonine, and combinations thereof. Also are included all compounds containing nitrogen from any sources that are acceptable for use in pet foods, such as animal & vegetable proteins, animal and vegetable protein hydrolysates, animal digests, yeast extracts, yeast hydrolysates, and combinations thereof.

Examples of carbohydrates include flours (e.g., rice flour, wheat flour), starches (e.g., native, pre-gelatinized, esterified starch), fibres (e.g., cellulose, methylcellulose), edible gums and/or thickening agents (e.g., carrageenan, locust bean gum), and sugars (e.g., dextrose, fructose).

Any available carbonyl compound that is capable of reacting with a nitrogen compound (such as an amino acid) in a Maillard reaction may be used in the present petfood to form a palatability enhancer. In some embodiments, the carbonyl compound is selected from the group consisting of monosaccharides, disaccharides, uronic acids, oligosaccharides, polysaccharides (e.g., starches, dextrines and edible gums) and their hydrolysis products, and combinations thereof. In preferred embodiments, the carbonyl compound is a reducing sugar, including aldoses or ketoses such as glucose, fructose, maltose, lactose, glyceraldehyde, glucosamine, dihydroxyacetone, arabinose, xylose, rhamnose, ribose, mannose, erythrose, threose and galactose. Typically, the total amount of carbonyl compound in the package wet pet food product prior to the heat treatment step is in the range of 0.02-6 wt.%, more preferably of 0.1-3 wt.% and most preferably of 0.5-2.5% wt.%.

Examples of chemical compounds include substituted pyrazines (e.g., 2,3,5-trimethylpirazine, 2-3-diethyl-5-methylpyrazine), substituted thiazoles (e.g., 2-acetylthiazole, 4-methylthiazole), substituted furans and furanones (e.g. 4-hydroxy-2,5-dimethyl-3(2H)-furanone, 3-Hydroxy-4,5-dimethylfuran-2(5H)-one), Strecker aldehydes (e.g., methional, 2-methybutanal), and combinations thereof.

The term "animal digest" means a material which results from chemical and/or enzymatic hydrolysis of clean, undecomposed animal tissue. In certain embodiments, "animal digest" as used herein, is fully consistent with the definition of animal digest promulgated by the Association of American Feed Control Officials, Inc. (AFFCO). Animal digest is preferable derived from animal tissues, including cold-blooded marine animals, excluding hair, horns, teeth, hooves, and feathers. The skilled artisan will appreciate that while such tissues are not preferred, trace amounts might be found unavoidably even under good manufacturing practices. Also not included are visceral contents or foreign or fecal matter, although trace contaminant amounts are sometimes present. An animal digest may be dried or not. Typically, examples of animal digests are:
- Digest of Poultry (or Pork, Beef, Lamb, Fish, etc.): material from Poultry (Pork, Beef, etc.): which results from chemical and/or enzymatic hydrolysis of clean and undecomposed tissue.
- Digest of Pork (or Beef, Sheep, Lamb, Fish, etc.) By-Products: material from Pork (Beef, Sheep, etc.) which results from chemical and/or enzymatic hydrolysis of clean and undecomposed tissue from non-rendered clean parts from cattle (pigs, sheep, lambs, etc.), other than meat, for example lungs, spleen, kidneys, brain, livers, blood, optionally partially defatted low temperature fatty tissue, and stomachs and intestines, freed of their contents.
- Digest of Poultry By-Products: material which results from chemical and/or enzymatic hydrolysis of clean and undecomposed tissue from non-rendered clean parts of poultry, other than meat and bones, such as livers, hearts, heads, feet and viscera. As used herein "poultry" encompasses any species or kind of bird, preferable chicken, turkey, duck, and the like.
- Digest of Fish By-Products: material which results from chemical and/or enzymatic hydrolysis of clean and undecomposed tissue from non-rendered clean parts from fish, other than meat and bones. As used herein, "fish" encompasses any species or kind of fish or crustaceans or mollusks, preferably tuna, salmon, cod, hake, sardine, shrimp, squid, and the like.

Animal digests may also be referred to as "animal products" or "animal by-products", all these terms being used herein as synonymous. Animal digests can contain acids (e.g., ascorbic acid, citric acid, phosphoric acids and the like), natural or synthetic preservatives (e.g., BHA, BHT, propyl gallate, octyl gallate, tocopherols, rosemary extracts and the like), and salts (e.g. sorbic acid salts, propionic acid salts, sulfuric acid salts, and the like) to ensure its shelf-life.

Examples of nutrients include, without limitation, essential amino acids, vitamins, minerals, and electrolytes, such as arginine, taurine, cysteine, tyrosine, vitamins A, C, E, D3, thiamin, riboflavin, pyridoxine, choline, calcium, phosphorus, potassium, sodium, zinc, iron, manganese, copper, iodine, and the like.

Wt% herein, unless otherwise specified is w/w %.

### Method of forming a petfood

In a first aspect, there is provided a method of forming a petfood, the method comprising:
providing an aqueous first liquid, in which is dispersed an animal-derived product or a meat analogue and in which is dissolved a hydrocolloid, wherein the hydrocolloid is an ionotropic gelling agent;
contacting droplets of the aqueous first liquid with a second liquid, the second liquid having cations dissolved or dispersed therein, to form gelled droplets comprising the animal-derived product or the meat analogue, and a metal ion-hydrocolloid;
separating the gelled droplets from the second liquid containing the containing the cations;
optionally combining the gelled droplets with a third liquid. The third liquid may be an aqueous or non-aqueous liquid (e.g. an oil). In an embodiment, the third liquid comprise water and a thickener. The gelled droplets may be sterilized. If combined with a third liquid, the method may involve optionally sterilizing the gelled droplets before or after combining them with the third liquid comprising a thickener. The third liquid may be a non-aqueous liquid, e.g. an oil, derived from plants (e.g. vegetable oil) or animals (e.g. fish oil). The present inventors considered that a thickened aqueous third liquid provides greater palatability to pets than an oil.

In a first aspect, there is also provided a method of forming a petfood, the method comprising:
providing an aqueous first liquid, in which is dispersed an animal-derived product or a meat analogue and in which is dissolved a hydrocolloid, wherein the hydrocolloid is an ionotropic gelling agent;
contacting droplets of the aqueous first liquid with a second liquid, the second liquid having cations dissolved or dispersed therein, to form gelled droplets comprising the animal-derived product or the meat analogue, and a metal ion-hydrocolloid;
separating the gelled droplets from the second liquid containing the containing the cations;
combining the gelled droplets with a third liquid comprising water and a thickener, optionally sterilizing the gelled droplets before or after combining them with the third liquid comprising a thickener.

The third liquid may be sterilized before or after combining with the first liquid comprising the sterilized gelled droplets.

The animal-derived product or meat analogue is dispersed in the aqueous first liquid. The animal-derived product has preferably been comminuted, i.e. subjected to being cut, shredded, ground or minced into pieces. Before addition to the aqueous first liquid, the animal-derived product or meat analogue has preferably been comminuted into particles that are 1mm or less in diameter, optionally 0.8 mm or less in diameter, optionally 0.7 mm or less in diameter, optionally 0.6 mm or less in diameter, optionally 0.5 mm or less in diameter.

The animal-derived product may comprise an edible portion of an animal material that includes animal protein. The animal-derived product may comprise meat. The animal material may comprise animal by-products. The animal material may suitably contain at least 50 wt.%, more preferably at least 70 wt.% and most preferably at least 85 wt.% of animal by-products and/or meat. Animal by-products may be the entire bodies or parts of animals or products of animal origin not intended for human consumption, including ova, embryos and sperm.

The animal-derived product (e.g. meat or animal by-product), before incorporation into the first liquid, may be of any suitable form, e.g. it may have been in a form selected from frozen (and then optionally defrosted), powdered, raw, and cooked form. It has been found that gelled droplets made with cooked animal-derived products are more palatable than those made with raw animal-derived products, which was, in turn, more palatable than those made with frozen animal-derived products, which was more palatable than those made with powdered animal-derived products. This is true for both cats and dogs products.

It has been found that animal-derived product (e.g. meat or animal by-product), particularly cooked animal-derived product (e.g. cooked meat or cooked animal by-product), derived from fish (e.g., tuna and/or salmon), was found to be particularly palatable in the gelled droplets. Animal-derived product derived from fish may also be termed fish-derived product. Fish-derived product, which may be cooked fish-derived product (e.g. fish-derived meat), may be derived from a fish selected from salmon, tuna, cod, tilapia, sardines, catfish, carp, trout, pangasius and kingfish. While cooked poultry liver was not tested, it is anticipated to be palatable to cats and dogs.

The meat analogue may be any animal-derived product-resembling animal protein in taste, texture and/or aroma. The meat analogue may comprise a plant protein, e.g., derived from a plant selected from soya, maize, wheat, potato, pulses, such as beans, peas and lentils, algae and fungi (e.g. mycoprotein).

The animal-derived product (e.g. meat or animal by-product) or meat analogue may be present in the first liquid, and in the gelled droplets, in an amount of from about 1 wt% to about 50 wt%, optionally from about 3 wt % to about 50 wt%, optionally from about 5 wt % to about 50 wt%, optionally from about 10 wt % to about 50 wt%, optionally from about 20 wt % to about 50 wt%.

The animal-derived product (e.g. meat or animal by-product), which may be derived from an animal selected from a mammal and fish, may be present in the first liquid, and in the gelled droplets, in an amount of from about 1 wt % to about 50 wt%, optionally from about 3 wt % to about 50 wt%, optionally from about 5 wt % to about 50 wt%, optionally from about 10 wt % to about 50 wt%, optionally from about 20 wt % to about 50 wt%.

Protein, e.g. animal protein or plant protein, may constitute at least 5 wt% of the animal-derived product or meat analogue in the in the first liquid, and in the gelled droplets; optionally, protein, e.g. animal protein or plant protein, may constitute at least 10 wt%, optionally from 5 wt% to 90 wt%, optionally from 10 wt% to 80 wt% of the animal-derived product or meat analogue in the first liquid, optionally from 15 wt% to 80 wt% of the animal-derived product or meat analogue in the first liquid and in the gelled droplets, optionally from 20 wt% to 80 wt% of the animal-derived product or meat analogue in the first liquid. Optionally, animal protein constitutes at least 5 wt% of the animal-derived product in the first liquid, and in the gelled droplets; optionally, protein, e.g., animal protein or plant protein, may constitute at least 10 wt%, optionally from 5 wt% to 90 wt%, optionally from 10 wt% to 80 wt% of the animal-derived product or meat analogue in the first liquid, and in the gelled droplets. The remaining wt% of the animal-derived product or meat analogue, i.e., other than protein, may include fats, carbohydrates and water.

The animal-derived product or meat analogue may be subjected to high shear, e.g., in a high shear rotor/stator mixer, before or after addition to the first liquid. High shear may involve agitating the animal-derived product or meat analogue, and the first liquid if present, in a process that may involve stirring, disintegrating and dispersing matter of animal, vegetable, mineral origin, e.g. at high speed of at least 100 rpm, optionally at least 500 rpm, optionally at least 1000 rpm, optionally from 100 rpm to 10,000 rpm, optionally from optionally from 500 rpm to 8,000 rpm, optionally from 1000 rpm to 8,000 rpm. The resulting particle size after high shear rotor/stator mixer might typically range between 50 - 100 microns.

The hydrocolloid dissolved in the first liquid is an ionotropic gelling agent. The hydrocolloid dissolved in the first liquid may react with cations to undergo ionotropic gelation and form hydrocolloid gelled droplets. Ionotropic gelation may occur via cross-linking of hydrocolloid chains with cations, typically a cation mediated gelation process of negatively charged polysaccharides. The hydrocolloid dissolved in the first liquid may comprise a carrageenan, a pectin, an alginate, or mixtures thereof.

The carrageenan may comprise Kappa-carrageenan or Iota-carrageenan, or mixtures thereof. Gelled droplets comprising a hydrocolloid which comprises solely carrageenan will be a thermoreversible gel and may not survive a pasteurization/sterilization process (i.e. may deteriorate) and may require alternative methods of treatment to be rendered shelf-stable, such as ohmic heating.

The pectin may comprise low methoxyl pectin (LM pectin), amidated low methoxyl pectin (LMA pectin), or mixtures thereof. LM pectin comprises less than 50% methoxyl groups.

LMA pectin comprises less than 50% methoxyl groups. Both LM and LMA pectin may form gelled droplets in the presence of multi-valent ions (particularly calcium ions) within a pH range of 3.5 to 8.5. Gelled droplets comprising a hydrocolloid comprising solely LM pectins are thermoreversible gels and may not survive pasteurization/sterilization (i.e. may deteriorate) and may require alternative methods of treatment to be rendered shelf-stable, such as ohmic heating. Gelled droplets comprising a hydrocolloid comprising solely LMA pectins are thermos-irreversible gels and will survive sterilization/pasteurization.

The hydrocolloid dissolved in the first liquid may comprise an alginate, wherein the alginate is selected from alginic acid, a group I alginate, calcium alginate, ammonium alginate, propane-1,2-diol alginate, and mixtures thereof. The group I alginate may be selected from sodium alginate and potassium alginate, and mixtures thereof. The alginate (including any cations associated therewith) may be present in the first liquid in an amount of about 0.01 wt% to about 5wt%, optionally, about 0.05 wt% to about 3 wt%, optionally about 0.1 wt% to about 2 wt%, optionally about 0.1 wt% to about 2 wt%. Wt% herein, unless otherwise specified is w/w %.

Alginate comprises chains of β-D-mannuronic acid (M units) and α-L-guluronic acid (G units), linked via (1 → 4) glycosidic linkage. The percentage of these units varies among algae species and impacts alginate properties. The alginates may be modified chemically and/or enzymatically to alter the properties of the resultant gels. The alginates may be modified to alter their molecular weight or M/G ratio. The enrichment with G units may result in a rigid structure and an enrichment with M units may produce a flexible molecular structure. The hydrocolloid dissolved in the first liquid may comprise an alginate, wherein the alginate may be a chemically modified alginate, a physically modified alginate, or an enzymatically modified alginate. The alginate may be a chemically and enzymatically modified alginate. The alginate may comprise a mixture of chemically, physically, and enzymatically modified alginates. The alginate may have been modified by methods including, but not limited to, thermal treating, enzyme treatment, ultrasound treatment, hydrolysis, and chemical treatment.

The hydrocolloid dissolved in the first liquid may be selected from alginate (wherein the alginate may have been chemically or enzymatically modified), pectin, LM pectin, LMA pectin, carrageenan, lota-carrageenan, Kappa-carrageenan, gellan, gelatin, agar, modified starch, methyl cellulose and hydroxypropylmethyl cellulose, or mixtures thereof.

The hydrocolloid is preferably alginate. The hydrocolloid may be present in the first liquid in an amount of about 0.01 wt% to about 5wt%, optionally, about 0.05 wt% to about 3 wt%, optionally about 0.1 wt% to about 2 wt%, optionally about 0.1 wt% to about 2 wt%. Wt% herein, unless otherwise specified is w/w %. The alginate may be present in the first liquid in an amount of about 0.01 wt% to about 5wt%, optionally, about 0.05 wt% to about 3 wt%, optionally about 0.1 wt% to about 2 wt%, optionally about 0.1 wt% to about 2 wt%.

The hydrocolloid may comprise a mixture of alginate and carrageenan. The ratio by weight of alginate to carrageenan may be from about 5:95 to about 95:5, optionally from about 20:80 to about 80:20, optionally from about 30:70 to about 70:30, optionally from about 40:60 to about 60:40, optionally about 50:50. Gelled droplets comprising a hydrocolloid comprising a mixture of alginate and carrageenan (for example a 50:50 ratio) were found to survive sterilization/pasteurization (i.e. they did not deteriorate).

The first liquid, and the gelled droplets, may further comprise one or more palatability enhancers. The palatability enhancer may comprise liquid and/or powder components. The palatability enhancer may be selected from fats and oils, nitrogen compounds (e.g., proteins, peptides, and free amino acids), carbohydrates (e.g. flours, starches, edible gums), carbonyl compounds, chemical molecules, animal digests, nutrients, natural or artificial flavors and aromas, preservatives including anti-oxidants, surfactants, texturing or stabilizing agents. The palatability enhancers can be added as such in the first liquid or added to the first liquid and react in situ for producing Maillard reaction products, and the like. The palatability enhancer may be present in the first liquid, and in the gelled droplets, in an amount of from 0.1 to 20 wt% of the first liquid, and the gelled droplets, optionally from 0.5 to 10 wt%, optionally from 1 to 8 wt%, optionally from 1 to 5 wt%.

The first liquid is aqueous, so includes water. Water may constitute at least 25 wt% of the first liquid (including all components dispersed and dissolved therein), optionally at least 30 wt%, optionally at least 35 wt%, optionally at least 40 wt%, optionally at least 50 wt%, optionally from 25 wt% to 90 wt%, optionally from optionally from 30 wt% to 90 wt%, optionally from 30 wt% to 80 wt%, optionally from 40 wt% to 80 wt%, optionally from 40 wt% to 70 wt%, optionally from 50 wt% to 70 wt%.

It was found that the first liquid containing a hydrocolloid and the animal-derived product or meat analogue would typically be acidic, e.g., having a pH between 5 and 6. However, increasing the pH, e.g., by addition of an alkaline substance, was found to be beneficial. Accordingly, optionally, an alkaline substance is present in one or both of the first and second liquid and is incorporated into the gelled droplets. It has been found that an alkaline substance can reduce the amount of multivalent cation and/or residence time of the first liquid in the second liquid to form the gelled droplets, compared to a reaction carried out in the absence of an alkaline substance. This is particularly advantageous for any pets for which multivalent cations should be kept to a low level. For example, the diet of cats should have a relatively low multivalent cation content, especially a low calcium content. By including an alkaline substance, this allows gelled droplets to be produced with a lower multivalent content than would otherwise be possible. The alkaline substance, which is incorporated into the gelled droplets, does not seem to have a detrimental effect on their palatability, and indeed, as shown in the Examples, it can increase palatability. Optionally, the alkaline substance comprises an alkali substance selected from a carbonate, and optionally the carbonate is selected from a multivalent metal carbonate and an alkali metal carbonate. The multivalent metal carbonate may be selected from an alkali earth carbonate, e.g., calcium carbonate and magnesium carbonate. The alkali metal carbonate may be selected from, for example, sodium carbonate (Na₂CO₃) and sodium hydrogen carbonate (NaHCO₃). Sodium carbonate (Na₂CO₃), sodium hydrogen carbonate (NaHCOs), potassium carbonate and potassium bicarbonate, are preferred as they are water soluble.

The alkaline substance may be present in the first liquid and/or the second liquid, and the gelled droplets, in an amount of from 0.001 wt% to 5 wt%, optionally from 0.01 wt% to 2 wt%, optionally from 0.01 wt% to 1 wt%, optionally from 0.05 wt% to 0.5 wt%. Optionally, one or both of the first and second liquid has a pH of greater than 6, optionally 6.5 or more, optionally 7 or more. One or all of the first, second and third liquid may have a pH of greater than 6, optionally 6.5 or more, optionally 7 or more, optionally 7 to 9, optionally above 7 up to 9. In an embodiment, the first liquid has a pH of from 6 to 8, optionally from 6.5 to 7.5, optionally about 7.

The first liquid, and the gelled droplets, may include one or more further ingredients selected from probiotics (e.g. Bacillus velezensis DSM 15544, Enterococcus faecium SF68, Bacillus subtillis P86), prebiotics (e.g., inulin, fructo-oligosaccharides, beta-glucans), post-biotics (e.g. yeast fermentates, metabolites of Bacillus subtillis), bacteria (e.g., bacterial dormant cells), a compound to help maintain good health in the animal (e.g. green lipped mussel powder, glucosamine), botanicals (e.g., Chamomilla recutita, Lavandula spp., Passiflora incarnata), colourants, pigments and combinations thereof. The further ingredients may be present in the first liquid, and in the gelled droplets, in an amount of from 0.01 to 20 wt% of the first liquid, and the gelled droplets, optionally from 0.5 to 10 wt%, optionally from 1 to 8 wt%, optionally from 1 to 5 wt%.

The first liquid, and the gelled droplets, may include, an ingredient, which may be a hydrocolloid, selected from a carbohydrate and a gum, and optionally the ingredient is selected from carrageenan, xanthan gum, guar gum, locust bean gum, cassia gum, and a native or a modified starch. The ingredient may be present in an amount of from 0.01 wt% to 1 wt%. Carbohydrate and gums, particularly hydrocolloids, have been found to prevent syneresis.

Optionally the first liquid, once the hydrocolloid has been added (wherein the hydrocolloid is an ionotropic gelling agent) is heated to assist hydration of the hydrocolloid. The first liquid may be heated to a temperature of at least 25 °C, optionally a temperature of from 25 ° C to 70 ° C, optionally a temperature of from 30 ° C to 70 ° C, for a sufficient period to hydrate the hydrocolloid, e.g., a period of at least 1 minute, optionally at least 5 minutes, optionally 1 minute to 30 minutes, optionally 5 minutes to 30 minutes, optionally about 10 minutes to 20 minutes.

The method involves contacting droplets of the aqueous first liquid with a second liquid, the second liquid having cations dissolved or dispersed therein, to form gelled droplets comprising the animal-derived product (e.g. meat or animal by-product) or the meat analogue and a metal ion-hydrocolloid. The cations dispersed in second liquid have an effect of causing gelling of the hydrocolloid (the ionotropic gelling agent).

The cations may be selected from alkali metal ions, alkali earth metal ions and transition metal ions. The alkali metal ions may be potassium which form potassium ion-hydrocolloid. The cations may be multivalent cations which form a multivalent metal ion-hydrocolloid. The multivalent metal cations may be selected from alkali earth metal ions and transition metal ions. The alkali earth metal ions may be selected from magnesium and calcium. The transition metal ions may be selected from iron, copper, manganese, cobalt, and zinc. Optionally, the second liquid includes a metal salt therein, wherein the metal salt is selected from a metal halide, and a metal organic salt. The metal halide may be selected from a metal halide chloride. The metal organic salt may be selected from a metal lactate, metal gluconate and metal acetate. Optionally, the second liquid includes a metal salt therein, wherein the metal salt is selected from calcium chloride, calcium acetate, calcium lactate and calcium gluconate. The metal salt may be present in the second liquid (before the first liquid has been added) in an amount of from 0.01 wt% to 8 wt%, optionally from 0.1 wt% to 8 wt%, optionally from 0.5 wt% to 4 wt%, optionally from 0.5 wt% to 4 wt%, optionally from 0.5 wt% to 3 wt%.

Optionally, the second liquid includes calcium chloride in an amount of from 0.01 wt% to 8 wt%, optionally from 0.1 wt% to 3 wt%, optionally from 0.1 wt% to 2 wt%, optionally from 0.1 wt% to 1 wt%, optionally from 0.3 wt% to 0.7 wt%, optionally about 0.5 wt%. Optionally, the second liquid includes calcium lactate in an amount of from 0.01 wt% to 8 wt%, optionally from 0.1 wt% to 3 wt%, optionally from 0.1 wt% to 2 wt%, optionally from 0.5 wt% to 1.5 wt%, optionally about 1 wt%. Optionally, the second liquid includes calcium gluconate in an amount of from 0.01 wt% to 8 wt%, optionally from 0.1 wt% to 8 wt%, optionally from 0.5 wt% to 4 wt%, optionally from 0.5 wt% to 4 wt%, optionally from 0.5 wt% to 3 wt%, optionally from 1 wt% to 3 wt%, optionally about 2 wt%. Optionally, the second liquid includes calcium acetate in an amount of from 0.01 wt% to 8 wt%, optionally from 0.1 wt% to 3 wt%, optionally from 0.1 wt% to 2 wt%, optionally from 0.5 wt% to 1.5 wt%, optionally about 1 wt%. Optionally, the second liquid includes calcium chloride in an amount of from 0.01 wt% to 8 wt%, optionally from 0.1 wt% to 3 wt%, optionally from 0.1 wt% to 2 wt%, optionally from 0.5 wt% to 1.5 wt%, optionally about 1 wt%.

Optionally, the second liquid includes a multivalent metal salt therein, wherein the multivalent metal salt is selected from a multivalent metal halide, and a multivalent metal organic salt. The multivalent metal halide may be selected from a multivalent metal halide chloride. The multivalent metal organic salt may be selected from a multivalent metal lactate, multivalent metal gluconate and multivalent metal acetate. Optionally, the second liquid includes a multivalent metal salt therein, wherein the multivalent metal salt is selected from calcium chloride, calcium acetate, calcium lactate and calcium gluconate. The multivalent metal salt may be present in the second liquid (before the first liquid has been added) in an amount of from 0.01 wt% to 8 wt%, optionally from 0.1 wt% to 8 wt%, optionally from 0.5 wt% to 4 wt%, optionally from 0.5 wt% to 4 wt%, optionally from 0.5 wt% to 3 wt%. Optionally, the second liquid includes calcium chloride in an amount of from 0.01 wt% to 8 wt%, optionally from 0.1 wt% to 3 wt%, optionally from 0.1 wt% to 2 wt%, optionally from 0.1 wt% to 1 wt%, optionally from 0.3 wt% to 0.7 wt%, optionally about 0.5 wt%.

If the hydrocolloid in the first liquid is a Kappa-carrageenan, the cation dispersed in the second liquid may be potassium, such that upon contacting the droplets of the first liquid with the second liquid, gelled droplets are formed which comprise a potassium ion-Kappa-carrageenan.

If the hydrocolloid in the first liquid is an Iota-carrageenan, the cation dispersed in the second liquid may be a multivalent metal ion, such that upon contacting the droplets of the first liquid with the second liquid, gelled droplets are formed which comprise a multivalent metal ion-lota-carrageenan. The multivalent metal ion may be calcium.

If the hydrocolloid in the first liquid is an alginate, the cation dispersed in the second liquid may be a multivalent metal ion, such that upon contacting the droplets of the first liquid with the second liquid, gelled droplets are formed which comprise a multivalent metal ion-alginate. The multivalent metal ion may be calcium.

If the hydrocolloid in the first liquid is pectin, the cation dispersed in the second liquid may be a multivalent metal ion, such that upon contacting the droplets of the first liquid with the second liquid, gelled droplets are formed which comprise a multivalent metal ion-pectin. The multivalent metal ion may be calcium.

Droplets of the first liquid may be formed and dropped into the second liquid using a spherification device. Droplets of the first liquid may be formed by allowing the first liquid to drip through a nozzle or container having apertures therein into the second liquid. The apertures may have a diameter of least 1 mm, optionally at least 2 mm, optionally at 3 mm, optionally a diameter of from 1 mm to 10 mm, optionally a diameter of from 2 mm to 10 mm, optionally a diameter of from 2 mm to 8 mm, optionally a diameter of from 2 mm to 6 mm, optionally a diameter of from 3 mm to 6 mm. The apertures may have a diameter of from 1.5 mm to 6 mm. The first liquid may be pumped through the nozzle or container by means of a mechanical pump or compressed air. Alternatively, droplets of the first liquid may be formed by spraying droplets of the first liquid into the second liquid.

The first liquid may be allowed to contact the second liquid for a period to allow the hydrocolloid to gel, i.e., forming the metal ion hydrocolloid. The period may be from 1 minute to 60 minutes, optionally from 5 minutes to 45 minutes, optionally from 5 minutes to 30 minutes, optionally from 10 minutes to 20 minutes.

The second liquid may be at a temperature of from 3 °C to 30 °C, optionally from 5°C to 25 °C.

The gelled droplets may have a hardness ranging between 0.5 N to 12 N. The gelled droplets may have a hardness ranging between 7 N to 10 N. This may be measured using a Texture Analyzer. Hardness was determined by a texture analyzer (Stable Micro Systems) with P/0.5R cylinder probe and a 5 kg load cell at room temperature, approximately 25 C. A compression test was performed with a test speed of 20.0 mm/min and compression distance of 4 mm. Hardness was expressed as the maximum force (N) needed for compression. The data were calculated and analysed with Stable Micro Systems Software.

The gelled droplets may have a diameter of at least 1 mm, optionally at least 2 mm, optionally at 3 mm, optionally a diameter of from 1 mm to 10 mm, optionally a diameter of from 2 mm to 10 mm, optionally a diameter of from 2 mm to 8 mm, optionally a diameter of from 2 mm to 6 mm, optionally a diameter of from 3 mm to 6 mm. Optionally, at least 50 % by number of the gelled droplets may have a diameter of at least 1 mm, optionally at least 2 mm, optionally at 3 mm, optionally a diameter of from 1 mm to 10 mm, optionally a diameter of from 2 mm to 10 mm, optionally a diameter of from 2 mm to 8 mm, optionally a diameter of from 2 mm to 6 mm, optionally a diameter of from 3 mm to 6 mm. Optionally, at least 80 % by number of the gelled droplets may have a diameter of at least 1 mm, optionally at least 2 mm, optionally at 3 mm, optionally a diameter of from 1 mm to 10 mm, optionally a diameter of from 2 mm to 10 mm, optionally a diameter of from 2 mm to 8 mm, optionally a diameter of from 2 mm to 6 mm, optionally a diameter of from 3 mm to 6 mm. Optionally, at least 90 % by number of the gelled droplets may have a diameter of at least 1 mm, optionally at least 2 mm, optionally at 3 mm, optionally a diameter of from 1 mm to 10 mm, optionally a diameter of from 2 mm to 10 mm, optionally a diameter of from 2 mm to 8 mm, optionally a diameter of from 2 mm to 6 mm, optionally a diameter of from 3 mm to 6 mm.

The gelled droplets may be separated from the second liquid containing the containing the cations using any suitable technique or device, e.g., by a technique selected from filtration, decanting and centrifugation.

The gelled droplets may be washed, e.g., by contacting with water, which may be pure water (e.g., tap water or distilled water), to remove any residual cations not associated with hydrocolloid on the surface of the gelled droplets. The gelled droplets may be washed by passing the droplets into a bath of water and then removing them, or passing water over the droplets. The gelled droplets may be contacted with water for a period of from 1 minute to 60 minutes, optionally from 5 minutes to 45 minutes, optionally from 10 minutes to 45 minutes, optionally from 20 minutes to 30 minutes.

The gelled droplets may be sieved if it is desired to sort them by size, e.g., separating gelled droplets of a certain diameter from the rest of the gelled droplets.

The gelled droplets may be combined with a third liquid comprising water and a thickener. The third liquid may further comprise an animal-derived product or meat analogue and/or a palatability enhancer. The third liquid containing the thickener forms a sauce or gravy around the gelled droplets. The thickener may be selected from a carbohydrate. The thickener may comprise a modified carbohydrate. A modified carbohydrate may be a carbohydrate that has undergone, for example, hydrolysis, partial hydrolysis, epimerisation, acetylation, methylation, sulfation. The thickener may comprise a starch, which may be a modified starch or a native starch, or an edible gum. The edible gum may be selected from carrageenan, xanthan gum, guar gum, locust bean gum, gum Arabic, psyllium gum, and cassia gum. The thickener may be selected from a starch (e.g. modified starch or native starch), carrageenan (e.g., Lambda-carrageenan), xanthan gum, guar gum, locust bean gum, gum Arabic, psyllium gum, and cassia gum.

Preferably, the thickener in the third liquid thickens (i.e. increases the viscosity of the third liquid) but does not gel. The third liquid comprising the thickener after heat sterilization or pasteurization has a viscosity at a shear rate of 10s⁻¹ and 25 °C of at least 3 Pa.s, optionally at least 5 Pa.s, optionally from 6 to 25 Pa.s. Viscosity may be measured by using a rotational rheometer (e.g. a commercially available rotational rheometer, such as that available from Malvern Kinexus), a serrated plate geometry with a 3 mm gap and a logarithmic shear rate ramp from 0.1 to 100 s⁻¹. The third liquid comprising the thickener, the animal-derived product or meat analogue and the gelled droplets after heat sterilization or pasteurization preferably has a viscosity at a shear rate of 10s⁻¹ and 25 °C of at least 3 Pa.s, optionally at least 5 Pa.s, optionally from 6 to 25 Pa.s, optionally, from 7 to 25 Pa.s, optionally from 8 to 25 Pa.s. It has been found that an aqueous thickened sauce aided palatability of the gelled droplets. It was found that, for animals that lick the gelled droplets to eat them such as cats and dogs, a greater portion of the gelled droplets would be consumed by animals when the gelled droplets were in a thickened aqueous sauce. If a sauce was not present or a thin sauce (e.g., just water or a sauce of similar viscosity as water) was present, a much greater proportion of the droplets would be scattered around a container in which the droplets were held while the pet was eating them. This is not desirable either for pets or pet owners, as the animal may find the feeding frustrating, and the pet owner would prefer pet foods to not be so messy.

The thickener may be present in the third liquid in a suitable amount, e.g. to achieve the viscosities mentioned above. In an embodiment, the thickener is present in an amount of from 0.01wt% to 15 wt%, optionally from 0.1 wt% to 15 wt%, optionally from 0.5 wt% to 15 wt%, optionally from 1 wt% to 15 wt%. Optionally, a modified starch, e.g., a gelatinized starch or an esterified starch, may be present in the third liquid in an amount of from 1 wt% to 15 wt%, optionally from 2 wt% to 15 wt%, optionally from 3 wt% to 15 wt%, optionally from 5 wt% to 15 wt%, optionally from 8 wt% to 12 wt%.

The third liquid may comprise an animal-derived product or a meat analogue. The third liquid may comprise a palatability enhancer. The third liquid may comprise an animal-derived product or a meat analogue and a palatability enhancer. The animal-derived product in the third liquid may be an edible portion of an animal material that includes animal protein. The animal material may suitably contain at least 50 wt.%, more preferably at least 70 wt.% and most preferably at least 85 wt.% of animal by-products.

The animal-derived product (e.g. meat or animal by-product), before incorporation into the third liquid, may be of any suitable form, e.g. it may have been in a form selected from frozen (and then optionally defrosted), powdered, raw, and cooked form. It has been found that gravy made with cooked animal-derived products (e.g. cooked meat or animal by-product) is more palatable than those made with raw animal-derived product (e.g. cooked meat or animal by-product), which was, in turn, more palatable than those made with frozen animal-derived product, which was more palatable than those made with powdered animal-derived product. This was true for both cat and dog products.

The meat analogue may be any animal-derived product-resembling animal protein in taste, texture and/or aroma. The meat analogue may comprise a plant protein derived, e.g., derived from a plant selected from soya, maize, wheat, potato, pulses, such as beans, peas and lentils, algae and fungi (e.g. mycoprotein).

The third liquid may further comprise one or more palatability enhancers. The palatability enhancer may comprise liquid and/or powder components. The palatability enhancer may be selected from fats and oils, nitrogen compounds (e.g. proteins, peptides, and free amino acids), carbohydrates (e.g. flours, starches, edible gums), carbonyl compounds, chemical molecules, animal digests, nutrients, natural or artificial flavors and aromas, preservatives including anti-oxidants, surfactants, texturing or stabilizing agents. The palatability enhancers can be added as such in the third liquid, or added to the third liquid and react in situ for producing Maillard reaction products, and the like. The palatability enhancer may be present in the third liquid in an amount of from 0.1 to 20 wt% of the third liquid, optionally from 0.5 to 10 wt%, optionally from 1 to 8 wt%, optionally from 1 to 5 wt%.

The third liquid may include one or more further ingredients, e.g., one or more further ingredients selected from probiotics (e.g. Bacillus velezensis DSM 15544, Enterococcus faecium SF68, Bacillus subtillis P86), prebiotics (e.g., inulin, fructo-oligosaccharides, beta-glucans), post-biotics (e.g. yeast fermentates, metabolites of Bacillus subtillis), bacteria (e.g., bacterial dormant cells), a compound to help maintain good health in the animal (e.g. green lipped mussel powder, glucosamine), botanicals (e.g., Chamomilla recutita, Lavandula spp., Passiflora incarnata), and combinations thereof. The further ingredients may be present in the third liquid in an amount of from 0.01 to 20 wt% of the third liquid, optionally from 0.5 to 10 wt%, optionally from 1 to 8 wt%, optionally from 1 to 5 wt%.

The method may involve sterilizing the gelled droplets before or after combining them with the third liquid comprising a thickener. The method may involve sterilizing the gelled droplets after combining them with the third liquid comprising a thickener to form the petfood, and having packaged, and optionally sealed, the petfood in a package. The sterilizing may be any suitable method that will kill bacteria in the sample. In an embodiment, the sterilizing is selected from a heat sterilization and a pasteurization. The heat sterilization may be carried out by heating the droplets to a temperature of 80 °C or more, 100 °C or more, optionally from 100 °C to 200 °C, optionally from 110 °C to 150 °C, optionally from 110 °C to 130 °C. The heat sterilization may be carried out for sufficient period until a desired low level of bacteria has been reached, optionally until there are no detectable live bacteria in the petfood. The sterilization value F₀ (expressed in minutes) can be defined as the thermal lethality time required to reduce the number of microorganisms, present in petfood to an acceptable level, by exposing them to a reference temperature of 121.1 °C The F₀ value may be at least 5, optionally at least 10, optionally at least 15, optionally from 5 to 30, optionally from 10 to 30, optionally from 15 to 25, optionally about 20. The heat sterilization may be carried out for a period of at least 5 minutes, optionally at least 10 minutes, optionally from 5 minutes to 2 hours, optionally from 10 minutes to 1 hour, optionally from 20 minutes to 40 minutes. Optionally, the heat sterilization is carried out by heating the gelled droplets or the petfood to a temperature of from 110 °C to 150 °C for a period of at least 5 minutes, optionally at least 10 minutes, optionally from 5 minutes to 2 hours, optionally from 10 minutes to 1 hour, optionally from 20 minutes to 40 minutes.

The method may involve sterilizing the third liquid comprising the thickener before or after combining with the first liquid comprising the sterilized gelled droplets.

The pasteurization may involve acidifying, and optionally heating, the gelled droplets before or after, preferably after, combining them with the third liquid comprising a thickener. The method may involve pasteurizing the gelled droplets after combining them with the third liquid comprising a thickener to form the petfood, and having packaged, and optionally sealed, the petfood in a package, wherein the pasteurization involves acidifying, and optionally heating, the petfood. The acidifying may involve adjusting the pH of the gelled droplets or the petfood to a level of 6 or less, optionally 5 or less, optionally from 2 to 6, optionally from 3 to 5, optionally from 3.5 to 5. The acidifying may involve adding an edible acid (i.e. edible to pets) to the gelled droplets or a liquid in which they are held, e.g. the third liquid containing the thickener. The edible acid may be an organic acid, e.g. an acid selected from lactic acid, acetic acid, citric acid, ascorbic acid and malic acid. The heating may involve heating to a temperature of 50 °C to 100 °C, optionally from 50 °C to 100 °C. Pasteurization may be carried out if higher temperature heat treatments could be detrimental to any of the components of the petfood.

The petfood, i.e. the gelled droplets in the third liquid comprising the thickener, may be packaged in a package, and optionally the petfood is sterilised in the package, e.g. by heat sterilization or pasteurization, as described above. The package is preferably a compressible package, such that the package, when opened, can be squeezed and the gelled droplets and third liquid comprising the thickener are dispensed from the package.

This was found to be an effective way of feeding pets, and less messy than, for example, a package in which the petfood is poured out (e.g. a simple receptacle, like a bowl, with a removable lid). The pets may be fed directly from the package with little mess.

The package may be a made of any suitable material, and preferably a material that allows the petfood to be heat-sterilised or pasteurised within it. The package material may comprise a material selected from a polymer, metal and glass. The polymer may be selected from polyester, such as PET and PBT, and a polyalkylene, such as polypropylene and polyethylene. The package may comprise a single type of polymer, for ease of recycling. The packaging may comprise a plurality of polymers, e.g. a plurality of polymers layers, e.g. the package having one or more walls comprising at least one layer comprising PET and at least one layer comprising polypropylene. In an embodiment, the package comprises a layer of PET and a layer of polypropylene, and optionally the PET is barrier coated, e.g. with a silicone or silica. In an example, the package comprises a metallised polymer. The package may be in the form of a pouch having flexible walls, and the flexible walls may comprise a material selected from a polymer and a metal. At least a portion of the package may be transparent or translucent to allow the gelled droplets and third liquid to be seen through the package. In an embodiment, the package may be in the form of a spoon, with the petfood package in the bowl of the spoon, with a removable cover over the bowl.

The flexible package is preferably a pouch. The term "pouch" herein refers to a closed container formed substantially or completely of a flexible sheet material. The sheet material normally comprises at least one continuous layer of plastic, e.g. thermoplastic, film, or it may be a laminated sheet made up of more than one plastic, e.g. thermoplastic, film layer. At least a portion of the sheet material may be transparent to allow inspection of the pouch contents. The sheet material is preferably substantially impermeable to liquids, and it is normally also substantially impermeable to gases such as oxygen. The sheet material making up the pouch may further comprise a metal layer, such as an aluminium layer, to render the material air-and light-impermeable and to provide aesthetic effects.

The package preferably consists of or consists essentially of the flexible sheet material. The package may, for example, be a so-called pillow pouch, typically formed by continuous form-fill-seal equipment, or it may be formed by bonding together front and back faces of flexible sheet materials around their marginal edges. In certain embodiments, the pouch may be a stand-up pouch. That is to say, a pouch formed by bonding together front and back faces of sheet material around three edges, with a gusset sheet inserted and bonded to the respective fourth edges of the front and back sheets to form a base for the pouch. In an embodiment, the pouch may be an elongated pouch having flexible walls, with the pouch being openable at one end, to allow the rest of the pouch to be squeezed to dispense the petfood from the open end. The total thickness of each flexible wall of the pouch is suitably in the range of from 50 micrometers to 1000 micrometers, for example 100 micrometers to 500 micrometers.

The package may be provided with a nip and/or a line of weakness and/or a tear strip to allow the package to be opened after filling. The package may contain from about 8 g to about 500 g of the petfood, optionally from 50 g to 300 g of the petfood, optionally from 50 g to 150 g of the petfood.

### Petfood

In a second aspect, there is provided a petfood comprising gelled droplets, wherein the gelled droplets comprise an animal-derived product or a meat analogue and a metal ion-hydrocolloid, optionally wherein the gelled droplets are dispersed in a liquid, wherein the liquid comprises a thickener. The petfood may have been made by a method according to the first aspect.

The gelled droplets may have a hydrocolloid dispersed throughout the gelled droplets. The method of the first aspect results in a gelled droplet with hydrocolloid dispersed throughout the gelled droplet. In contrast, a method involving reverse spherification will produce gelled droplets having a shell comprising hydrocolloid enclosing a liquid (the liquid containing the cations and any other components dropped into a further liquid comprising dissolved hydrocolloid).

The hydrocolloid which may be dispersed throughout the gelled droplets is an ionotropic gelling agent. The hydrocolloid may comprise a carrageenan, a pectin, an alginate, or mixtures thereof.

The carrageenan may comprise Kappa-carrageenan or Iota-carrageenan, or mixtures thereof. The pectin may comprise low methoxyl pectin (LM pectin), amidated low methoxyl pectin (LMA pectin), or mixtures thereof. The alginate may be selected from alginic acid, a group I alginate, calcium alginate, ammonium alginate, propane-1,2-diol alginate, and mixtures thereof. The group I alginate may be selected from sodium alginate and potassium alginate, and mixtures thereof. The alginate may be a chemically modified alginate, a physically modified alginate, or an enzymatically modified alginate. The alginate may be a chemically and enzymatically modified alginate. The alginate may comprise a mixture of chemically, physically, and enzymatically modified alginates. The alginate may have been modified by methods including, but not limited to, thermal treating, enzyme treatment, ultrasound treatment, hydrolysis, and chemical treatment.

The hydrocolloid which may be dispersed throughout the gelled droplets may be selected from alginate (wherein the alginate may have been chemically or enzymatically modified), pectin, LM pectin, LMA pectin, carrageenan, Iota-carrageenan, Kappa-carrageenan, gellan, gelatin, agar, modified starch, methyl cellulose and hydroxypropylmethyl cellulose, or mixtures thereof. The hydrocolloid is preferably alginate.

The hydrocolloid may comprise a mixture of alginate and carrageenan. The ratio by weight of alginate to carrageenan may be from about 5:95 to about 95:5, optionally from about 20 80 to about 80:20, optionally from about 30:70 to about 70:30, optionally from about 40:60 to about 60:40, optionally about 50:50.

The petfood may comprise any of the components mentioned above in relation to the first aspect in the same amounts as mentioned for the first aspect. For example, the gelled droplets may comprise any of the components selected from the animal-derived product, the meat analogue, palatability enhancer, and alkaline substances mentioned in relation to the first aspect and the wt% of the component in the gelled droplets may be the same as in the first liquid. Similarly, the third liquid and any of its components in the petfood may be as identified above for the first aspect and present in a wt% in the third liquid as stated above for the first aspect.

The gelled droplets may constitute from 90 wt% to 30wt% of the petfood, and the third liquid comprising thickener and any other components constitutes from 10 wt% to 70 wt% of the petfood.

There is further provided a package containing the petfood as described herein. The package may be as described above for the first aspect.

In a third aspect, there is provided a petfood comprising:
gelled droplets comprising an animal-derived product or a meat analogue, a metal ion-hydrocolloid and an alkaline substance,
optionally wherein the gelled droplets are dispersed in a liquid, optionally wherein the liquid comprises an animal-derived product or a meat analogue, and a thickener. The gelled droplets and/or the third liquid may comprise a palatability enhancer. The liquid may be an aqueous liquid or a non-aqueous liquid. The aqueous liquid may comprise a thickener. The non-aqueous liquid may comprise an oil, e.g. a plant-derived or animal-derived oil. The petfood of the third aspect may be made according to the method of the first aspect. Alternatively, the petfood may have been made according to a method involving reverse spherification, i.e., wherein the animal-derived product or meat analogue, and any other components of the gelled droplets, are in an aqueous liquid comprising a cation, droplets of which are contacted with an aqueous liquid containing a dissolved hydrocolloid, forming the gelled droplets. The alkaline substance and all other components may be as described in relation to the first aspect.

In a fourth aspect, there is provided a petfood comprising:
gelled droplets comprising an animal-derived product or a meat analogue, and a metal ion-hydrocolloid,
optionally wherein the gelled droplets are dispersed in a liquid, optionally wherein the liquid comprises a thickener, the petfood further comprising a palatability enhancer, other than the meat or the meat analogue in the gelled balls, for an animal. The liquid may be an aqueous liquid or a non-aqueous liquid. The aqueous liquid may comprise a thickener. The non-aqueous liquid may comprise an oil, e.g. a plant-derived or animal-derived oil. The petfood may have been made in a method according to the first aspect. Alternatively, the petfood may have been made according to a method involving reverse spherification, i.e. wherein the animal-derived product or meat analogue, and any other components of the gelled droplets, are in an aqueous liquid comprising a cation, droplets of which are contacted with an aqueous liquid containing a dissolved hydrocolloid, forming the gelled droplets. The palatability enhancer and all other components may be as described in relation to the first aspect.

In a fifth aspect, there is provided a petfood comprising:
gelled droplets comprising an animal-derived product or a meat analogue, and a metal ion-hydrocolloid,
optionally wherein the gelled droplets are dispersed in a liquid, optionally wherein the liquid comprises an animal-derived product or a meat analogue, and a thickener, wherein one or both of the gelled droplets and the liquid comprises a palatability enhancer, optionally wherein:
   the gelled balls comprise a palatability enhancer selected from free amino acids, yeast extracts, hydrolysates, and/or the liquid comprises a palatability enhancer selected from meat or a meat analogue, meat flavours, free amino acids, yeast extracts, and hydrolysates. The liquid may be an aqueous liquid or a non-aqueous liquid. The aqueous liquid may comprise a thickener. The non-aqueous liquid may comprise an oil, e.g. a plant-derived or animal-derived oil. The petfood may have been made in a method according to the first aspect. Alternatively, the petfood may have been made according to a method involving reverse spherification, i.e. wherein the animal-derived product or meat analogue, and any other components of the gelled droplets, are in an aqueous liquid comprising a cation, droplets of which are contacted with an aqueous liquid containing a dissolved hydrocolloid, forming the gelled droplets. The palatability enhancer and all other components of the petfood may be as described in relation to the first aspect.

In a sixth aspect, there is provided a petfood comprising:
gelled droplets comprising an animal-derived product or a meat analogue and a metal ion-hydrocolloid, optionally wherein the gelled droplets are dispersed in a liquid, optionally wherein the liquid comprises a thickener, wherein the liquid comprising the thickener and the gelled droplets has a viscosity at 25 °C and a shear rate of 10s⁻¹ of at least at least 3 Pa.s, optionally at least 5 Pa.s, optionally at least 6 Pa.s , optionally at least 7 Pa.s, optionally from 6 to 25 Pa.s, optionally from 7 to 25 Pa.s, optionally from 8 to 25 Pa.s, optionally at least 15 Pa.s, optionally 15 to 25 Pa.s. The liquid may be an aqueous liquid or a non-aqueous liquid. The aqueous liquid may comprise a thickener. The non-aqueous liquid may comprise an oil, e.g. a plant-derived or animal-derived oil. The petfood may have been made in a method according to the first aspect. Alternatively, the petfood may have been made according to a method involving reverse spherification, i.e. wherein the animal-derived product or meat analogue, and any other components of the gelled droplets, are in an aqueous liquid comprising a cation, droplets of which are contacted with an aqueous liquid containing a dissolved hydrocolloid, forming the gelled droplets. The thickener and all other components may be as described in relation to the first aspect.

There is also provided a petfood comprising the gelled droplets, wherein the third liquid and the gelled droplets together may have a viscosity at 25 °C and a shear rate of 10 s⁻¹ of at least 3 Pa.s, optionally at least 5 Pa.s, optionally from 6 to 25 Pa.s optionally from 7 to 25 Pa.s, optionally from 8 to 25 Pa.s, optionally at least 15 Pa.s, optionally 15 to 25 Pa.s.

Where reverse spherification may be used in any of the aspects, any sterilization is preferably not a heat-sterilization that leads to deterioration of the gelled droplets, e.g. a chemical sterilization or pasteurization involving the addition of acid here at a sufficiently low temperature to avoid destruction of the gelled droplets but at a sufficiently high temperature to result in sterilization. Pasteurization is described above.

There is also provided a petfood comprising gelled droplets, wherein the gelled droplets comprise an animal-derived product or a meat analogue and a metal ion-hydrocolloid, wherein the petfood has been made by a method according to the first aspect, such that the gelled droplets are dispersed in the third liquid comprising water and a thickener, wherein the third liquid may further comprise an animal-derived product or meat analogue, and a palatability enhancer, and the gelled droplets may comprise a palatability enhancer.

### Examples

The presently disclosed subject matter will be further described by reference to the following non-limiting Examples.

The pet food products described herein were produced by the following methods:

### General method of forming gelled droplets (spherification)

The calcium alginate flavoured droplets were produced by using traditional ('basic') spherification in which sodium or potassium alginate (typically between 0.5-2 wt.%) is dispersed into a flavoured liquid containing an animal-derived product or a meat analogue (typically between 5-35 wt.%) and palatability enhancers for cats and dogs (typically between 1-30 wt.% for raw materials such as, but not limited to, animal digests, nitrogen and carbonyl compounds, flavourings, and antioxidants). The flavoured alginate solution was heated between 25-70 °C for 15 minutes in a jacketed mixing tank to hydrate the alginate.

A meat grinder/cutter was used to reduce the particle size of the animal-derived product or meat analogue (including bones) to < 0.5 mm. A high shear rotor/statormixer (for example, but not limited to, a Silverson) was used to reduce fibrous material from the animal-derived product or meat analogue in the flavoured alginate solution to a particle size which may typically range between 50 - 100 microns.

The flavored alginate solution was then dropped in the form of a droplet into a water bath containing calcium ions (typically containing between 0.5-2 wt.% of, for example, calcium chloride, calcium lactate and/or calcium gluconate). The spherical droplets were formed from a nozzle head (for example, 1.5 mm - 6 mm nozzle diameter) by action of a pump or by compressed air which allows the flow of the flavoured liquid into the nozzle head. Upon the immersion of the droplets in this calcium ion bath, the flavored liquid was encapsulated into a gelled shell that is formed by chemical reaction, in which the calcium ions diffuse and displace the sodium or potassium from the alginate, cross-linking the alginate chains to form a calcium alginate gel network. Residence time of the flavoured droplets in the calcium bath was typically between 7-30 minutes at 25 °C, depending on the droplet size.

Once the gelled droplets were formed, these were then transferred into a second water bath to wash off the excess calcium. Residence time in the wash off bath was typically between 20-30 minutes at 3-25 °C. The remaining calcium ions in the flavored alginate droplet continue to diffuse towards the center of the droplet even after the wash bath, and eventually form a solid gel droplet with a hardness ranging between 5-12 N. Hardness was determined by a texture analyzer (Stable Micro Systems) with P/0.5R cylinder probe and a 5 kg load cell at room temperature, approximately 25 °C. A compression test was performed with a test speed of 20.0 mm/min and compression distance of 4 mm. Hardness was expressed as the maximum force (N) needed for compression. The data were calculated and analyzed with Stable Micro Systems Software. A sieve can be used to remove excess calcium/bath/water bath and to sort the size and shape of the droplets.

### General method of forming the gravy

The gravy was produced by dispersing a modified starch (typically between 3-15 wt.%) and a thickener (typically between 0.01-0.8 wt%) into a flavored liquid containing an animal-derived product or a meat analogue (typically between 5-35 wt.%), and a palatability enhancer (typically between 3-30 wt.%). The flavoured gravy was mixed at a set temperature (for example, 25-50 °C) in a mixing tank to allow the dispersion of the starch and thickener within the liquid.

A meat grinder/cutter was used to reduce the particle size of the animal-derived product (including bones) or meat analogue to < 0.5 mm. A high shear rotor/statormixer (for example, but not limited to, a Silverson) was used to reduce fibrous material from the animal-derived product or meat analogue in the flavoured alginate solution to a particle size range between 50 - 100 microns.

### General method of sterilisation and packaging

Once the flavored droplets and the gravy were prepared, these were filled and hermetically sealed into, for example, a spoon/cup or metalized pouch or clear mini pouch packaging with a gelled droplet to gravy ratio between 90:10 wt.% to 30:70 wt.%. The packaging was then retorted (in, for example, an autoclave) with specific temperature, pressure, and time limits to reach a sterilization value F₀ > 3. The sterilization value F₀ (expressed in minutes) can be defined as the thermal lethality time required to reduce the number of microorganisms, present in petfood to an acceptable level, by exposing them to a reference temperature of 121.1 °C and a temperature coefficient of destruction Z-value of 10 °C. A filling station with a balance was used to weigh the gelled droplets and gravy into the packaging prior to sealing.

In the case where certain active compounds can have their activity reduced or can be destroyed by heat (e.g. green lipped mussel powder, probiotic Bacillus velezensis DSM 15544) then the preservation of the flavoured droplets was achieved by pasteurisation under acidic conditions (pH < 4.5). The acidification of the flavoured droplets and gravy can be achieved by the addition of different organic acids such as, but not limited to, lactic acid, acetic acid, citric acid, ascorbic acid, and malic acid. The packaging was then pasteurized (in, for example, an autoclave) with specific temperature, pressure, and time limits to reach a pasteurization value F₀ > 3. The pasteurization value F₀ (expressed in minutes) can be defined as the thermal lethality time required to reduce the number of microorganisms present in petfood to an acceptable level, by exposing them to a reference temperature of 93 °C and a temperature coefficient of destruction Z-value of 8 °C.

The presently disclosed subject matter will be further described by reference to the following non-limiting Examples. The petfood products in the following Examples resembled caviar in appearance.

Variations of the petfood product (final product) were prepared and evaluated in feeding trials with cats and dogs to determine the palatability of the product. The palatability was evaluated by parameters such as the average intake of the product, and the refusal rates. Furthermore, the 'pet parents' experiences were also evaluated in the trials. Non-limiting comparisons are summarised herein.

### Method to assess palatability using the "two-bowl test" in cats.

The "two bowl test" is conducted with two petfood products (e.g., Product A and Product B). In this feeding trial also called "versus test" the two products are presented simultaneously to each individual cat within the same group of cats. Identical amounts of product were served in each of the two bowls. In the feeding trial the cats were twice exposed to the two products. The position of the two bowls was switched in the second exposure to avoid any bias. The quantity eaten was measured after each single meal exposure. Statistical analysis (Analysis of variance) was made on the data to determine the statistical significance of the observed differences.

### Method to assess palatability using the "one-bowl test" in cats.

The "one-bowl test" is conducted with one petfood and the quantity eaten indicates the level of acceptance of the petfood. The quantity eaten can be then compared to the reference intake of a control (e.g., Product A and Control). In this feeding trial the one petfood is presented simultaneously to each individual cat within a group of cats on Day 1. The control is then offered simultaneously to each individual cat within the same group of cats on Day 2. Identical amounts of product were offered for the one petfood and the control. In this feeding trial the cats were twice exposed to the two products. The position of the one-bowl was switched in the second exposure to avoid any bias. The quantity eaten was measured after each single meal exposure. The percentage of refusals for each product was determined as the number of feeding occasions in which a cat eats less than 10% of the amount offered, divided by the total number of feeding occasions. Statistical analysis (analysis of variance) was made on the data to determine the statistical significance of the observed differences.

### Method to assess palatability using the "one-bowl test" in dogs.

The "one-bowl test" conducted with dogs followed the same methodology as previously described, measuring the level of acceptance and percentage of refusals of the petfood.

### Sterilisation vs pasteurisation

The effect of sterilisation/pasteurisation of the pet food product was studied. Two pet food products were prepared, where one was a pasteurised finished product (Product 1) at pH < 4.5 (measured 24 h after retort) and the other one was a sterilised finished product (Product 2) at elevated temperature and a pH of 6.3 measured 24 h after retort). The inventors found that the sterilisation process at pH 6.3 resulted in a product that was more palatable to cats than the product produced by pasteurisation at a pH < 4.5.

### Product 1 - pasteurised

Recipe Product 1, pasteurised (1% wt.% calcium lactate in water for spherification bath), droplets mean diameter 4 mm and 90:10 wt. %droplets to gravy ratio:

| **Recipe for Products - Product 1** | | | | |
|---|---|---|---|---|
| | | | **Subrecipe Inclusion wt. %** | **Inclusion wt. %** |
| **Finished product** | | | | |
| | Droplets | | 90.00 | |
| | Gravy | | 10.00 | |
| | | *Subtotal* | **100.00** | |

| **Droplets** | | | | |
|---|---|---|---|---|
| Chicken-derived product powder | | | 8.00% | 7.20% |
| Water | | | 89.15% | 80.23% |
| Free amino acids | | | 1.10% | 0.99% |
| Reducing sugars | | | 0.06% | 0.05% |
| Sodium alginate | | | 1.00% | 0.90% |
| Antioxidant | | | 0.70% | 0.63% |
| | | *Subtotal* | **100.00** | |

| **Gravy** | | | | |
|---|---|---|---|---|
| Chicken-derived product powder | | | 8.00% | 0.80% |
| Water | | | 89.15% | 8.91% |
| Free amino acids | | | 1.10% | 0.11% |
| Reducing sugars | | | 0.06% | 0.006% |
| Sodium alginate | | | 1.00% | 0.10% |
| Antioxidant | | | 0.70% | 0.07% |
| | | *Subtotal* | **100.00** | |

### Product 2 - sterilised

Recipe for Product 2, sterilised (1 wt. % calcium lactate in water for spherification bath), droplets mean diameter 4 mm and 90:10 wt. % droplets to gravy ratio:

| **Recipe for Product - Product 2** | | | | |
|---|---|---|---|---|
| | | | **Subrecipe Inclusion wt. %** | **Inclusion wt. %** |
| **Finished product** | | | | |
| | Droplets | | 90.00 | |
| | Gravy | | 10.00 | |
| | | *Subtotal* | **100.00** | |

| **Alginate Droplets** | | | | |
|---|---|---|---|---|
| Chicken-derived product powder | | | 8.00% | 7.20% |
| Water | | | 89.85% | 80.86% |
| Free amino acids | | | 1.10% | 0.99% |
| Reducing sugars | | | 0.06% | 0.05% |
| Sodium alginate | | | 1.00% | 0.90% |
| | | *Subtotal* | **100.00** | |

| **Gravy** | | | | |
|---|---|---|---|---|
| Chicken-derived -product powder | | 8.00% | 0.80% | |
| Water | | 89.85% | 8.98% | |
| Free amino acids | | 1.10% | 0.11% | |
| Reducing sugars | | 0.06% | 0.006% | |
| Sodium alginate | | 1.00% | 0.10% | |
| | *Subtotal* | **100.00** | | |

Intake two-bowl test results:

| Contrast | Difference (g) | 95% Lower | 95% Upper | Standard Error | p-value |
|---|---|---|---|---|---|
| Product 1 - Product 2 | -9.02 | -12.06 | -5.98 | 1.55 | <0.0001 |

Product Intake two-bowl test results:

| Variable | Product 1 | Product 2 | p-value |
|---|---|---|---|
| Mean Intake (g) | 3.24 | 12.27 | <0.0001 |

In the experiment above, sterilisation provided more palatable pet food products than pasteurisation. In a further experiment, the inventors found that gelled droplets which were produced by reverse spherification were not suitable for high temperature sterilisation. During heating at elevated temperatures, the droplets formed by reverse spherification burst. Therefore, experiments with reverse spherification were not continued and the following examples utilise a standard ('basic') spherification technique to generate the gelled droplets.

### Product pH Comparison Tests

The effect of the pH of the pet food product was studied. Two pet food products were prepared where one was at a pH of 5.4 (Product 3) and one was at pH 7 with the addition of sodium carbonate (Product 4). Each pet food product was compared independently against a reference control (creamy cat treat) known to be very palatable to cats (chicken variety). The inventors found that the pet food product at a higher pH (Product 4) had a lower refusal rate and a higher average intake (26% refusal, 14 g average intake) than the pet food product at a lower pH (Product 3, 30% refusal, 13 g average intake). Therefore, Product 4 performed more favourably against the control formulation than Product 3. The pet food product at a higher pH (Product 4) was therefore more palatable for cats than the pet food product at a lower pH (Product 3).

### Product 3 - pH of 5.4

Recipe for Product 3, sterilised (1 wt. % calcium lactate in water for spherification bath), finished product pH of 5.4 (measured 24 h after retort), droplets mean diameter of 4 mm, 90:10 wt. % droplets to gravy ratio. Viscosity of finished product at a shear rate of 10 s⁻¹ and 25 C was 6 Pa.s.

| **Recipe for Product - Product 3** | | | | |
|---|---|---|---|---|
| | | | **Subrecipe Inclusion wt. %** | **Inclusion wt. %** |
| **Finished product** | | | | |
| | Droplets | | 90.00 | |
| | Gravy | | 10.00 | |
| | | *Subtotal* | **100.00** | |

| **Alginate Droplets** | | | | |
|---|---|---|---|---|
| Yeast extract | | | 5.00% | 4.50% |
| Chicken-derived product powder | | | 10.00% | 9.00% |
| Water | | | 82.51% | 74.26% |
| Free amino acids | | | 1.00% | 0.90% |
| Reducing sugars | | | 0.12% | 0.11% |
| Sodium alginate | | | 1.00% | 0.90% |
| Antioxidant | | | 0.20% | 0.18% |
| Flavouring | | | 0.17% | 0.15% |
| | | *Subtotal* | **100.00** | |

| **Gravy** | | | | |
|---|---|---|---|---|
| Yeast extract | | | 10.000% | 1.00% |
| Water | | | 82.780% | 8.28% |
| Free amino acids | | | 1.000% | 0.10% |
| Reducing sugars | | | 0.120% | 0.01% |
| Modified starch | | | 6.000% | 0.60% |
| Thickening agent | | | 0.100% | 0.01% |
| | | *Subtotal* | **100.00** | |

One-bowl test results for product 3 and control (Creamy cat treat):

| | Control | Product 3 | p-value |
|---|---|---|---|
| Refusal (%) | 5.6 | 29.6 | 0.031 |
| Intake (g) | 12.59 | 6.75 | <0.001 |

### Product 4 - pH of 7

Recipe for Product 4, sterilised (1 wt. % calcium lactate in water for spherification bath), finished product pH of 7.1 (measured 24 h after retort), droplets mean diameter of 4 mm, 60:40 wt. % droplets to gravy ratio. Viscosity of finished product at a shear rate of 10s⁻¹ and 25 C was 9 Pa.s.

| **Recipe for Product - Product 4** | | | | |
|---|---|---|---|---|
| | | | **Subrecipe Inclusion wt. %** | **Inclusion wt. %** |
| **Finished product** | | | | |
| | Droplets | | 60 | |
| | Gravy | | 40 | |
| | | *Subtotal* | **100** | |

| **Alginate Droplets** | | | | |
|---|---|---|---|---|
| Chicken-derived product powder | | | 20.00% | 12.00% |
| Water | | | 77.50% | 46.50% |
| Free amino acids | | | 1.10% | 0.66% |
| Reducing sugars | | | 0.06% | 0.03% |
| Sodium Alginate | | | 1.00% | 0.60% |
| Sodium Carbonate | | | 0.20% | 0.12% |
| Flavouring | | | 0.15% | 0.09% |
| | | *Subtotal* | **100** | |

| **Gravy** | | | | |
|---|---|---|---|---|
| Chicken-derived product powder | | | 10.00% | 4.00% |
| Water | | | 82.40% | 32.96% |
| Free amino acids | | | 1.10% | 0.44% |
| Reducing sugars | | | 0.06% | 0.02% |
| Modified starch | | | 6.00% | 2.40% |
| Thickener | | | 0.10% | 0.04% |
| Sodium Carbonate | | | 0.20% | 0.08% |
| Flavouring | | | 0.15% | 0.06% |
| | | *Subtotal* | **100** | |

One-bowl test results for product 4 and control (Creamy cat treat):

| | Product 4 | Control | p-value |
|---|---|---|---|
| Refusal (%) | 25.9 | 3.7 | < 0.0001 |
| Intake (g) | 13.64 | 23.06 | < 0.0001 |

### Frozen animal-derived products and powdered animal-derived products

The effect of incorporating frozen animal-derived products or powdered animal-derived products into the pet food product was studied. Two pet food products were prepared, where one comprised powdered animal-derived products (Product 4) and one comprised frozen animal-derived products (Product 5). Each pet food product was compared independently against a control product (Creamy cat treat - chicken variety). The inventors found that the pet food product comprising frozen animal-derived products (Product 5) had a lower refusal rate and a higher average intake (20% refusal, 18 g average intake) than the pet food product comprising powdered animal-derived products (Product 4, 26% refusal, 14 g average intake). The pet food product comprising frozen animal-derived products (Product 5) was therefore more palatable for cats than the pet food product comprising powdered animal-derived products (Product 4).

### Product 4 - powdered animal-derived products

Recipe as previously described for Product 4.

One-bowl test results for Product 4 and control (Creamy cat treat) as previously described.

### Product 5 - frozen animal-derived products

Recipe for Product 5, sterilised (1 wt. % calcium lactate in water for spherification bath), finished product pH of 6.8 (measured 24 h after retort), droplets mean diameter of 6 mm, 60:40 wt. % droplets to gravy ratio. Viscosity of finished product at a shear rate of 10 s⁻¹ and 25 C was 6 Pa.s.

| **Recipe for Product - Product 5** | | | |
|---|---|---|---|
| | | **Subrecipe Inclusion wt. %** | **Inclusion wt. %** |
| **Finished product** | | | |
| | Droplets | 60.00 | |
| | Gravy | 40.00 | |
| *Subtotal* | | **100.00** | |

| **Alginate Droplets** | | | |
|---|---|---|---|
| Fish-derived product frozen | | 9.00% | 5.40% |
| Chicken-derived product frozen | | 21.00% | 12.60% |
| Water | | 67.54% | 40.52% |
| Free amino acids | | 1.10% | 0.66% |
| Reducing sugars | | 0.06% | 0.03% |
| Sodium Alginate | | 1.00% | 0.60% |
| Sodium Carbonate | | 0.10% | 0.06% |
| Flavouring | | 0.15% | 0.09% |
| Antioxidant | | 0.06% | 0.04% |
| *Subtotal* | | **100.00** | |

| **Gravy** | | | |
|---|---|---|---|
| Chicken-derived product | | | |
| powder | | 10.00% | 4.00% |
| Water | | 82.50% | 33.00% |
| Free amino acids | | 1.10% | 0.44% |
| Reducing sugars | | 0.06% | 0.02% |
| Modified starch | | 6.00% | 2.40% |
| Thickener | | 0.10% | 0.04% |
| Sodium Carbonate | | 0.10% | 0.04% |
| Flavouring | | 0.15% | 0.06% |
| *Subtotal* | | 100.00 | |

One-bowl test results for product 5 and control (Creamy cat treat):

| | Product 5 | Control | p-value |
|---|---|---|---|
| Refusal (%) | 20.4 | 9.3 | 0.588 |
| Intake (g) | 17.58 | 22.26 | 0.004 |

### Cooked animal-derived products with animal digest

The effect of the incorporation of cooked animal-derived products with the addition of an animal digest into the pet food product was studied. One product was prepared, comprising cooked animal-derived products and an additional animal digest (Product 6). The inventors found that the incorporation of cooked meat and the addition of the animal digest improved palatability, as indicated by the lower refusal rate and higher average intake of Product 6 (19% refusal, 19 g average intake) when compared to the previous pet food products (Products 1 to 5). Both frozen animal-derived products and cooked animal-derived products were palatable for cats.

### Product 6 - Cooked animal-derived products with the addition of animal digest

Recipe for Product 6, sterilised (1 wt. % calcium lactate in water for spherification bath), finished product pH 7.1 (measured 24 h after retort), droplets mean diameter of 3 mm, 80:20 wt. % droplets to gravy ratio. Viscosity of finished product at a shear rate of 10 s⁻¹ and 25 C was 7 Pa.s.

| **Recipe for Product - Product 6** | | | |
|---|---|---|---|
| | | **Subrecipe Inclusion wt. %** | **Inclusion wt. %** |
| **Finished product** | | | |
| | Droplets | 80 | |
| | Gravy | 20 | |
| | *Subtotal* | **100** | |

| **Alginate Droplets** | | | |
|---|---|---|---|
| Fish-derived product cooked | | 30.00% | 24.00% |
| Water | | 65.34% | 52.27% |
| Free amino acids | | 1.10% | 0.88% |
| Reducing sugars | | 0.06% | 0.04% |
| Flavouring | | 0.30% | 0.24% |
| Sodium Alginate | | 1.00% | 0.80% |
| Sodium Carbonate | | 0.15% | 0.12% |
| Antioxidant | | 0.06% | 0.05% |
| Animal digest | | 2.00% | 1.60% |
| | *Subtotal* | **100** | |

| **Gravy** | | | |
|---|---|---|---|
| Chicken-derived product powder | | 10.00% | 2.00% |
| Water | | 71.18% | 14.24% |
| Free amino acids | | 1.10% | 0.22% |
| Reducing sugars | | 0.06% | 0.01% |
| Modified starch | | 15.00% | 3.00% |
| Thickening agent | | 0.35% | 0.07% |
| Sodium Carbonate | | 0.01% | 0.002% |
| Flavouring | | 0.30% | 0.06% |
| Animal digest | | 2.00% | 0.40% |
| | *Subtotal* | **100** | |

One-bowl test results for Product 6:

| | Product 6 |
|---|---|
| Refusal (%) | 18.5 |
| Intake (g) | 18.57 |

### Increased concentration of animal digest and cooked animal-derived product in gravy

The effect of higher concentrations of animal digest and the addition of cooked animal-derived product in the gravy was studied. Two pet food products were prepared, where one comprised cooked animal-derived products and an animal digest at 2 wt.% (Product 6), and one which comprised cooked animal-derived product, an animal digest at 3 wt.%, and 10 wt.% added cooked animal-derived product in the gravy (Product 7). The pet food products were tested in feeding trials with cats to evaluate their palatability. The inventors found that the pet food product comprising an increased concentration of animal digest and the addition of cooked animal-derived products in the gravy (Product 7) had a lower refusal rate and a higher average intake (9% refusal, 22 g average intake) when compared to the previous pet food products (Products 1 to 6). Therefore, increasing the concentrations of animal digest and the addition of cooked animal-derived products in the gravy increased palatability.

### Product 6

Recipe and feeding trial results as previously described.

### Product 7

Recipe for Product 7, sterilised (1 wt. % calcium lactate in water for spherification bath), finished product pH 6.9 (measured 24 h after retort), droplets mean diameter of 3 mm, 70:30 wt. % droplets to gravy ratio. Viscosity of finished product at a shear rate of 10 s⁻¹ and 25 C was 15 Pa.s.

| **Recipe for Product - Product 7** | | | | |
|---|---|---|---|---|
| | | | **Subrecipe Inclusion wt. %** | **Inclusion wt. %** |
| **Finished product** | | | | |
| | Droplets | | 70 | |
| | Gravy | | 30 | |
| | | *Subtotal* | **100** | |

| **Alginate Droplets** | | | | |
|---|---|---|---|---|
| Fish-derived product cooked | | | 35.00% | 24.50% |
| Water | | | 57.82% | 40.47% |
| Animal digest | | | 3.00% | 2.10% |
| Free amino acids | | | 2.70% | 1.89% |
| Sodium Alginate | | | 1.00% | 0.70% |
| Sodium Carbonate | | | 0.10% | 0.07% |
| Flavouring | | | 0.30% | 0.21% |
| Antioxidant | | | 0.08% | 0.06% |
| | | *Subtotal* | **100** | |

| **Gravy** | | | | |
|---|---|---|---|---|
| Chicken-derived product cooked | | | 10.00% | 3.00% |
| Chicken-derived product powder | | | 10.00% | 3.00% |
| Water | | | 63.66% | 19.10% |
| Animal digest | | | 3.00% | 0.90% |
| Free amino acids | | | 2.70% | 0.81% |
| Modified starch | | | 10.00% | 3.00% |
| Thickener | | | 0.32% | 0.10% |
| Flavouring | | | 0.30% | 0.09% |
| Antioxidant | | | 0.02% | 0.01% |
| | | *Subtotal* | **100** | |

One-bowl test results for Product 7 and control (Creamy cat treat):

| | Product 7 | Control | p-value |
|---|---|---|---|
| Refusal (%) | 9.3 | 7.4 | 0.23 |
| Intake (g) | 22.15 | 22.5 | 0.57 |

### Testing palatability for dogs

The palatability of a pet food product for dogs according to the present subject matter was studied. For Product 8, there was an 100% acceptance rate, 0% refusal in the dog feeding trials, demonstrating the pet food products of the present application are palatable and suitable as dog food products.

Recipe for Product 8, sterilised (1 wt. % calcium lactate in water for spherification bath), finished product pH 7.2 (measured 24 h after retort), droplets mean diameter of 3 mm, 70:30 wt. % droplets to gravy ratio. Viscosity of finished product at a shear rate of 10 s⁻¹ and 25 C was 7 Pa.s.

| **Recipe for Product - Product 8** | | | | |
|---|---|---|---|---|
| | | | **Subrecipe Inclusion wt. %** | **Inclusion wt. %** |
| **Finished product** | | | | |
| | Droplets | | 80 | |
| | Gravy | | 20 | |
| | | *Subtotal* | **100** | |

| **Alginate Droplets** | | | | |
|---|---|---|---|---|
| Fish-derived product cooked | | | 30.00% | 24.00% |
| Water | | | 65.34% | 52.27% |
| Free amino acids | | | 1.10% | 0.88% |
| Reducing sugars | | | 0.06% | 0.04% |
| Sodium Alginate | | | 1.00% | 0.80% |
| Sodium Carbonate | | | 0.15% | 0.12% |
| Flavouring | | | 0.30% | 0.24% |
| Antioxidant | | | 0.06% | 0.05% |
| Animal digest | | | 2.00% | 1.60% |
| | | *Subtotal* | **100** | |

| **Gravy** | | | | |
|---|---|---|---|---|
| Animal-derived product powder | | | 10.00% | 2.00% |
| Water | | | 71.18% | 14.24% |
| Free amino acids | | | 1.10% | 0.22% |
| Reducing sugars | | | 0.06% | 0.01% |
| Modified starch | | | 15.00% | 3.00% |
| Thickening agent | | | 0.35% | 0.07% |
| Sodium Carbonate | | | 0.01% | 0.00% |
| Flavouring | | | 0.30% | 0.06% |
| Animal digest | | | 2.00% | 0.40% |
| | | *Subtotal* | **100** | |

One-bowl test results for Product 8:

| | Product 8 |
|---|---|
| Refusal (%) | 0 |
| Intake (g) | 12 |

### Viscosity of the finished product and packaging type

Consumer studies were conducted with cats to test how the viscosity of the finished product and the type of packaging for the pet food product affected palatability. Initially, a study on 22 cats with Product 3 with a viscosity of 6 Pa.s at a shear rate of 10 s⁻¹ demonstrated that a pet food product comprising droplets and a low viscosity gravy in a sealed spoon shaped package was messy, frustrating for the cats, difficult to eat, and resulted in splashing when opened. A second study was conducted on 6 cats with Product 5 with a viscosity of 5 Pa.s at a shear rate of 10 s⁻¹ in a sealed spoon shaped package. In this study, the pet food product was also messy, the droplets were difficult to eat and resulted in liquid splashing. Testing a Product 6 with a viscosity of 7 Pa.S at a shear rate of 10 s⁻¹ sealed in a spoon shaped package on 1 cat resulted in less mess and less liquid splashing, but still some droplets on the floor. The same product was tested in a sealed translucent pouch package and was found that this package resulted in a less messy experience for consumers, albeit some droplets ended up on the floor. Finally, a study was conducted on 6 cats with pet food Product 7 with a viscosity of 15 Pa.s at a shear rate of 10 s⁻¹ in a sealed translucent pouch package. This study resulted in less mess. The viscosity of finished Product 7 was increased by the addition of higher levels of thickener and modified starch in the recipe.

### Packaging Examples:

The following non-limiting examples of packaging for the gravy and droplets can be used:
- Metalized petfood pouch, e.g. suitable for holding a wet cat petfood.
- Spoons pack made of mono polypropylene with a 10% EVOH barrier. With a PET/ALU/ONY/Easy Peel Sealant.
- Translucent pouches made of 12p PET, 60p PP, the PET Barrier-coated with SiOx.
- Translucent pouches made of mono polypropylene.
- Glass jars with aluminum screw lids.

## Claims

1. A method of forming a petfood, the method comprising:
providing an aqueous first liquid, in which is dispersed an animal-derived product or a meat analogue and in which is dissolved a hydrocolloid, wherein the hydrocolloid is an ionotropic gelling agent;
contacting droplets of the aqueous first liquid with a second liquid, the second liquid having cations dissolved or dispersed therein, to form gelled droplets comprising the animal-derived product or the meat analogue, and a metal ion-hydrocolloid;
separating the gelled droplets from the second liquid containing the cations;
combining the gelled droplets with a third liquid comprising water and a thickener,
optionally sterilizing the gelled droplets before or after combining them with the third liquid comprising a thickener.

2. A method according to claim 1, wherein an alkaline substance is present in one or in all of the first, second and third liquid.

3. A method according to claim 2, wherein the alkaline substance is an alkali metal carbonate.

4. A method according to claim 2 or claim 3, wherein one or all of the first, second and third liquid have pH of greater than 6, optionally 6.5 or more, optionally 7 or more, optionally 7 to 9.

5. A method according to any one of the preceding claims, wherein the method involves sterilizing the gelled droplets before or after combining them with the third liquid comprising a thickener by heating the droplets to a temperature of 70 °C or more, optionally from 90 °C to 200 °C, optionally from 110 °C to 150 °C.

6. A method according to any one of the preceding claims, wherein the animal-derived product in the first liquid, before formation of the gelled droplets, comprises cooked animal-derived product, optionally wherein the animal is selected from mammals and fish.

7. A method according to any one of the preceding claims, wherein the petfood comprising the gelled droplets and the third liquid has a viscosity at 25 °C and a shear rate of 10 s⁻¹ of at least 3 Pa.s, optionally at least 5 Pa.s, optionally from 6 to 25 Pa.s.

8. A method according to any one of the preceding claims, wherein the thickener in the third liquid is selected from a carbohydrate such as a starch, which may be a modified starch or a native starch, and an edible gum.

9. A method according to any one of the preceding claims, wherein the gelled droplets in the third liquid are packaged and sealed in a compressible package that allows the third liquid and gelled droplets to be squeezed out when the package is unsealed.

10. A method according to any one of the preceding claims, wherein the hydrocolloid in the first liquid is selected from a pectin, an Iota-carrageenan, a Kappa-carrageenan and an alginate.

11. A method according to any one of the preceding claims, wherein if the hydrocolloid in the first liquid is a pectin, an lota-carrageenan, or an alginate, then the cation dispersed in the second liquid is calcium, optionally if the hydrocolloid is a Kappa-carrageenan then the cation is potassium.

12. A petfood comprising gelled droplets, wherein the gelled droplets comprise an animal-derived product or a meat analogue and a metal ion-hydrocolloid, wherein the petfood has been made by a method according to any one of claims 1 to 11, such that the gelled droplets are dispersed in the third liquid comprising water and a thickener.

13. A petfood according to claim 12, wherein the gelled droplets constitute from 90 wt% to 30 wt% of the petfood, and the third liquid comprising thickener and any other components constitutes from 10 wt% to 70 wt% of the petfood.

14. A petfood according to claim 12 or claim 13, wherein the gelled droplets contain an alkaline substance, optionally an alkali metal carbonate, and optionally a palatability enhancer.

15. A petfood according to any one of claims 12 to 14, wherein the petfood comprising the gelled droplets and the third liquid has a viscosity at 25 °C and a shear rate of 10 s⁻¹ of at least 5 Pa.s, optionally from 6 to 25 Pa.s.

16. A petfood according to any one of claims 12 to 15, wherein the petfood is packaged and sealed in a compressible package that allows the third liquid and gelled droplets to be squeezed out when the package is unsealed.
